# EUROPEAN PATENT APPLICATION

(11) **EP 4 708 441 A1**
(43) Date of publication of application: **11.03.2026**
(21) Application number: 25810775.4
(22) Date of filing: 21.01.2025
(51) Int. Cl.: H01M 10/0567, H01M 10/0525, H01M 10/054

(54) **ELECTROLYTE ADDITIVE, ELECTROLYTE AND BATTERY**

(30) Priority: 05.06.2024 CN 202410720189
(71) Applicant: Guangzhou Tinci Materials Technology Co., Ltd., Guangzhou, Guangdong 510760 (CN)
(72) Inventor: LIU, Jiaxi, Guangzhou, Guangdong 510670 (CN); GAO, Yuanpeng, Guangzhou, Guangdong 510670 (CN); SUN, Wenpo, Guangzhou, Guangdong 510670 (CN)
(74) Representative: Plougmann Vingtoft a/s
(86) International application number: PCT/CN2025/073564
(87) International publication number: WO 2025/251643

(57) **Abstract**

Provided are an electrolyte additive, an electrolyte, and a battery. The electrolyte additive includes a first additive, a second additive, and a third additive. The first additive includes a compound represented by formula 1: 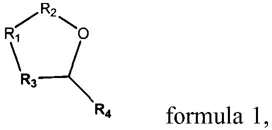 where: R₁ is selected from C atom or O atom; R₂ is selected from 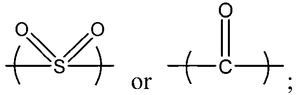 R₃ is selected from methylene, 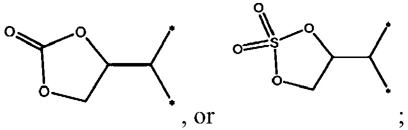 R₄ is selected from 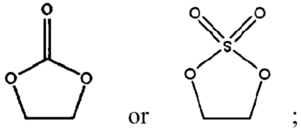 and at least one of R₂, R₃, and R₄ contain sulfur atom. The second additive includes at least one of a compound represented by formula 2 or a compound represented by formula 3: 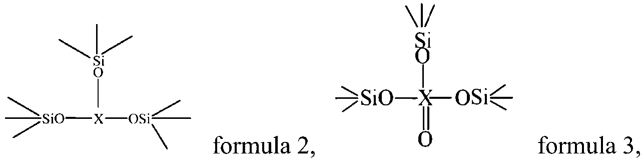 where X includes P atom or B atom. The third additive includes a compound represented by formula 4: R-N=C=O formula 4, where R includes at least one of alkyl, O=C=N-substituted alkyl, cycloalkyl, O=C=N-substituted cycloalkyl, aryl, or O=C=N-substituted aryl. In this way, a stable and low-impedance interface film may be formed on an electrode surface, reducing impedance and gas production of the battery, and improving cycle performance of the battery.

## Description

### PRIORITY INFORMATION

This application claims priority to and benefits of Chinese patent application No. 202410720189.5, filed with China National Intellectual Property Administration on June 05, 2024, the entire content of which is incorporated herein by reference.

### FIELD

The present disclosure relates to the technical field of batteries, and particularly, to an electrolyte additive, an electrolyte, and a battery.

### BACKGROUND

In recent years, secondary batteries have been widely used in the fields of portable electronic products, electric vehicles, and an energy storage. However, with increasingly higher requirements on performance from the market, for the present electrolytes, reactions of the electrolytes on a surface of an electrode material may be accelerated at a high temperature condition, causing the decomposition of the electrolytes and the generation of gas. The generated gas may cause the battery to swell and bulge, easily leading to rupture and electrolyte leakage, thereby posing significant safety hazards. Electrolytes in the related art further have the problems such as slow ion dynamics, slow ion solvation and de-solvation processes, and reduced ion deintercalation rate. These problems may lead to increased concentration polarization and internal impedance of the battery, as well as a shortened cycle life.

### SUMMARY

The present disclosure aims to solve at least one of the technical problems in the related art.

In a first aspect, the present disclosure provides an electrolyte additive. The electrolyte additive includes a first additive, a second additive, and a third additive. The first additive includes a compound represented by formula 1: 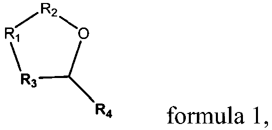 where: R₁ is selected from C atom or O atom; R₂ is selected from 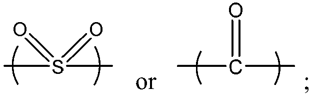 R₃ is selected from methylene, 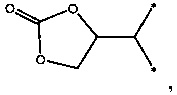 or 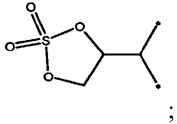 R₄ is selected from 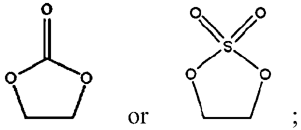 and at least one of R₂, R₃, and R₄ contain sulfur atom. The second additive includes at least one of a compound represented by formula 2 or a compound represented by formula 3: 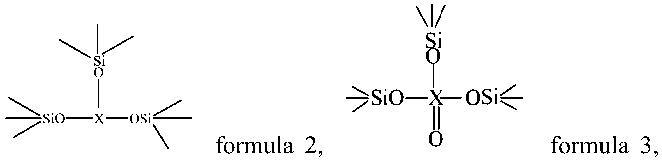 where X includes P atom or B atom. The third additive includes a compound represented by formula 4: R-N=C=O formula 4, where R includes at least one of alkyl, O=C=N-substituted alkyl, cycloalkyl, O=C=N-substituted cycloalkyl, aryl, or O=C=N-substituted aryl. In this way, a stable and low-impedance interface film can be formed on an electrode surface, reducing impedance and gas production of the battery. Thus, the cycle performance of the battery can be improved.

According to some embodiments of the present disclosure, R includes at least one of alkyl having 1 to 10 carbon atoms, O=C=N-substituted alkyl having 1 to 10 carbon atoms, cycloalkyl having 1 to 10 carbon atoms, O=C=N-substituted cycloalkyl having 1 to 10 carbon atoms, aryl having 6 to 10 carbon atoms, or O=C=N-substituted aryl having 6 to 10 carbon atoms.

According to some embodiments of the present disclosure, a mass ratio of the first additive, second additive, and third additive in the electrolyte additive is 1:(0.01 to 10):(0.01 to 10). In this way, the stable and low-impedance interface film can be formed on the electrode surface, thereby reducing the gas production of the battery and removing water or acid generated by a reaction in the electrolyte. Thus, the structure stability of an electrode can be improved.

According to some embodiments of the present disclosure, the first additive includes at least one of 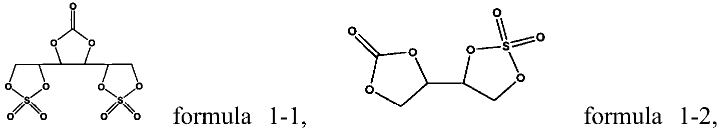 or

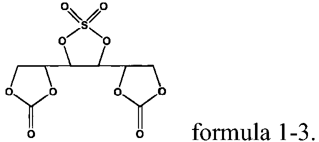

According to some embodiments of the present disclosure, the second additive includes at least one of 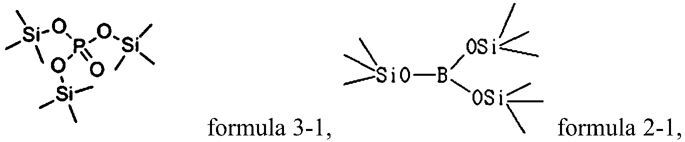 or 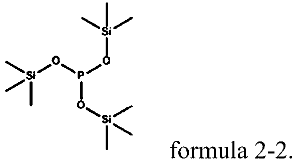 In this way, a stable and highly conductive interface film can be formed on the electrode surface, thereby improving the electrode's ability to transfer charges and reducing the impedance of the battery.

According to some embodiments of the present disclosure, the third additive includes at least one of 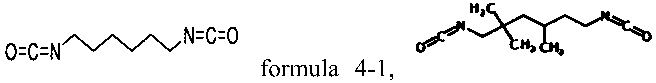 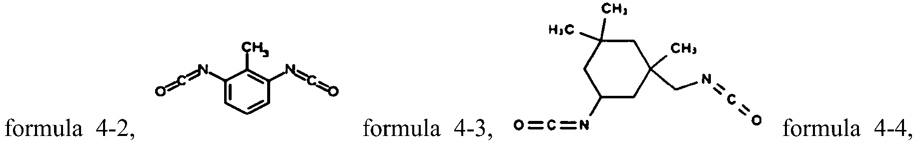 or 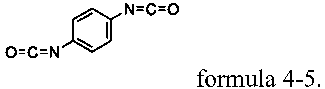 In this way, while removing the water and inhibiting the acid, the above-described third additive may be polymerized on the electrode surface to form long polymer chains, thereby forming the stable and low-impedance interface film. Thus, the internal resistance of the battery can be reduced.

According to some embodiments of the present disclosure, the electrolyte additive further includes a fourth additive. The fourth additive includes at least one of vinylene carbonate, fluoroethylene carbonate, ethylene sulfate, 1,3-propanesultone, or polystyrene. Thus, the fourth additive acts synergistically with the first additive, the second additive, and the third additive to decompose in advance at an early stage of battery formation through a carbon chain ring-opening reaction, thereby forming an interface film. In this way, the stability of the interface film and the wettability to the electrolyte can be improved. As a result, the cycle performance of the battery is improved.

According to some embodiments of the present disclosure, a mass ratio of the first additive, second additive, third additive, and fourth additive in the electrolyte additive is 1:( 0.01 to 10):(0.01 to 10):(0.005 to 100).

In a second aspect, the present disclosure provides an electrolyte. The electrolyte includes the electrolyte additive provided in the first aspect of the present disclosure.

According to some embodiments of the present disclosure, based on a total mass of the electrolyte, a mass fraction of the first additive ranges from 0.1% to 5%. In this way, a low-impedance interface film is formed on the electrode surface, reducing the internal resistance of the battery. This also reduces contact between an electrolyte solvent and the electrode and the probability of the decomposition of the electrolyte solvent, and suppresses gas production of the battery.

According to some embodiments of the present disclosure, based on a total mass of the electrolyte, a mass fraction of the second additive ranges from 0.1% to 5%. In this way, the low-impedance interface film is formed on the electrode surface, reducing the internal resistance of the battery.

According to some embodiments of the present disclosure, based on a total mass of the electrolyte, a mass fraction of the third additive ranges from 0.1% to 5%. In this way, while removing the water and inhibiting the acid, the stable and low-impedance interface film is formed, and the internal resistance of the battery is reduced.

According to some embodiments of the present disclosure, the electrolyte further includes a fourth additive. Based on a total mass of the electrolyte, a mass fraction of the fourth additive ranges from 0.5% to 5%. In this way, the fourth additive acts synergistically with the first additive, the second additive, and the third additive to decompose in advance at the early stage of battery formation through a carbon chain ring-opening reaction, thereby forming the interface film. In this way, the stability of the interface film and the wettability to the electrolyte can be improved. As a result, the cycle performance of the battery is improved.

According to some embodiments of the present disclosure, the electrolyte further includes an electrolyte salt. Based on a total mass of the electrolyte, a mass fraction of the electrolyte salt ranges from 12% to 18%.

In a third aspect, the present disclosure provides a battery. The battery includes the electrolyte additive provided in the first aspect of the present disclosure or the electrolyte provided in the second aspect of the present disclosure.

According to some embodiments of the present disclosure, the battery includes a positive electrode plate and a negative electrode plate. The battery is a lithium-ion battery, a positive active material of the positive electrode plate including one or more of LiFe_{1-x'}M'_{x'}PO₄, LiMn_{2-y'}M_{y'}O₄, or LiNiₓCo_{y}Mn_{z}M_{1-x-y-z}O₂, where: M' includes one or more of Mn, Mg, Co, Ni, Cu, Zn, Al, Sn, B, Ga, Cr, Sr, V, or Ti; M includes one or more of Fe, Co, Ni, Mn, Mg, Cu, Zn, Al, Sn, B, Ga, Cr, Sr, V, or Ti; and 0≤x' <1, 0≤y'≤1, 0≤y≤1, 0≤x≤1, 0≤z≤1, and x + y + z≤1; and/or the battery is a sodium-ion battery, a positive active material of the positive electrode plate including Na_{c}P_{d}(WₐO_{b})Z_{c}, where: P includes transition metal element; W includes at least one of phosphorus, sulfur, silicon, or tungsten; Z includes F atom; and 0≤c≤10, 0≤d≤5, 0≤a≤10, 0≤b≤10, and 0≤e≤5; and/or a negative active material of the negative electrode plate includes at least one of soft carbon, hard carbon, a silicon-based material, or a tin-based material.

### DETAILED DESCRIPTION OF THE EMBODIMENTS

Embodiments of the present disclosure are described in detail below. The embodiments described below are exemplary and are merely used to explain the present disclosure, and cannot be construed to limit the present disclosure. The techniques or conditions without specific indication shall be those described in the literature in the field or in accordance with the product specification. The reagents or instruments used without the indication of the manufacturers are all conventional products that can be purchased commercially.

In a first aspect, the present disclosure provides an electrolyte additive. The electrolyte additive includes a first additive, a second additive, and a third additive.

The first additive includes a compound represented by formula 1: 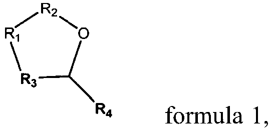 where: R₁ is selected from C atom or O atom; R₂ is selected from 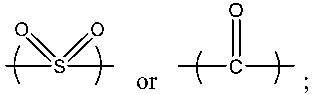 R₃ is selected from methylene, 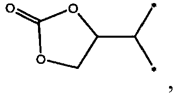 or 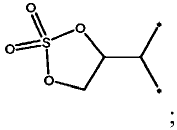 R₄ is selected from 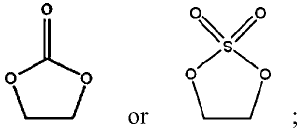 and at least one of R₂, R₃, and R₄ contain sulfur atom.

The second additive includes at least one of a compound represented by formula 2, or a compound represented by formula 3: 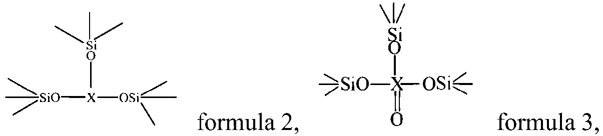 where X includes P atom or B atom.

The third additive includes a compound represented by formula 4: R-N=C=O formula 4, where R includes at least one of alkyl, O=C=N-substituted alkyl, cycloalkyl, O=C=N-substituted cycloalkyl, aryl, or O=C=N-substituted aryl.

In this way, a stable and low-impedance interface film can be formed on an electrode surface, improving a transport rate of active metal ions, reducing impedance of a battery, reducing gas production of the battery, and improving rate performance and cycle performance of the battery.

The principle by which the present disclosure can achieve the above-described beneficial effects is described in detail below.

The electrolyte additive provided in the present disclosure includes the first additive, the second additive, and the third additive, simultaneously. The first additive, due to the ring structure of both ethylene carbonate (EC) and ethylene sulfate (DTD), has higher HOMO energy than a carbonate solvent and lower LUMO energy. Therefore, the first additive may undergo a redox polymerization reaction on a positive electrode and a negative electrode prior to the solvent, to form the interface film on the electrode surface (CEI film on the positive electrode and SEI film on the negative electrode). The formed interface film has good ionic conductivity, which can increase the transport rate of the active metal ions and reduce an internal resistance of the battery. Moreover, the interface film formed on the electrode surface can also reduce probability of the contact between the electrolyte and the electrodes (i.e., the positive electrode and the negative electrode), reducing the risk of catalytical decomposition of the electrolyte and the gas production. In the meantime, the second additive is introduced to prevent the interfacial film from continuously thickening during charging and discharging, which would affect transport of the active metal ions. The first additive and products obtained by the decomposition of the second additive jointly form an interfacial film on the electrode surface, which contains trimethylsilyloxy alkyl compound (Me3-Si-O-R). As a result, the formed interface film has more pores and better conductivity, which can increase the transport rate of the active metal ions and thus reduce the internal resistance of the battery. Meanwhile, the interface film can also prevent the formation of long-chain substances by reducing the adhesion of organic matter from the electrolyte to the electrode surface and mitigate an impact of steric hindrance caused by excessively long carbon chains on the transport of the active metal ions, further reducing a SEI internal resistance of the battery. However, the second additive contains a leaving group (acid or alcohol residue) that reacts with trace water or acid in the electrolyte to generate acid, which affects stability of the electrolyte. In this regard, the third additive is introduced. Isocyanate in the third additive can react with water, alcohol, and acid to remove the water and inhibit the acid, and further inhibit hydrolysis of lithium salts and the gas production of the battery. Further, it may also polymerize on the electrode surface to generate substances with polyamide group, which participate in formation of the interface film, thereby improving its stability of the interface film and reducing its impedance. In this way, the cycle performance of the battery is improved. Combined use of the second additive and the third additive can also prevent the water removal reaction rate from being excessively high, ensuring stable operation of the battery.

According to some embodiments of the present disclosure, R includes at least one of alkyl having 1 to 10 carbon atoms, O=C=N-substituted alkyl having 1 to 10 carbon atoms, cycloalkyl having 1 to 10 carbon atoms, O=C=N-substituted cycloalkyl having 1 to 10 carbon atoms, aryl having 6 to 10 carbon atoms, or O=C=N-substituted aryl having 6 to 10 carbon atoms.

According to some embodiments of the present disclosure, the first additive includes at least one of 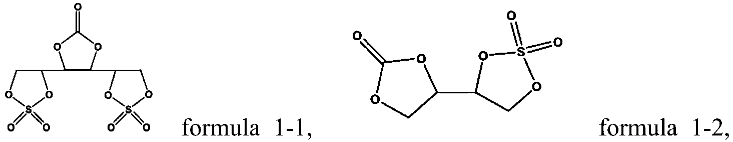 or 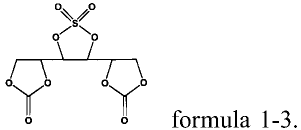 Therefore, the above-described first additive may undergo the redox polymerization reaction on the positive electrode and the negative electrode prior to the solvent, to form the interface film on the electrode surface (the CEI film on the positive electrode and the SEI film on the negative electrode). The formed interface film has good ionic conductivity, which can increase the transport rate of the active metal ions and reduce the internal resistance of the battery. Moreover, the interface film formed on the electrode surface can also reduce the probability of the contact between the electrolyte and the electrodes (i.e., the positive electrode and the negative electrode), reducing a risk of the catalytical decomposition of the electrolyte and the gas production.

According to some embodiments of the present disclosure, the second additive includes at least one of 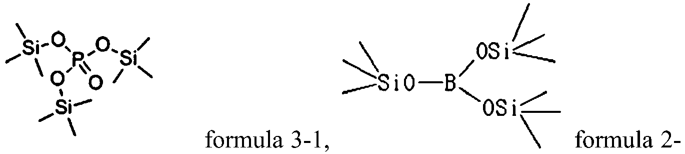 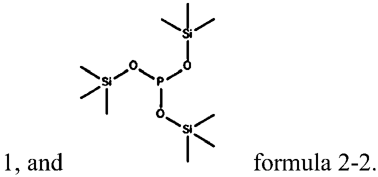 In this way, the products obtained by the decomposition of the above-described second additive may participate in the formation of the low-impedance interface film on the electrode surface. The products obtained by the decomposition and the first additive jointly form the interfacial film on the electrode surface. The interface film formed therefrom contains the trimethylsilyloxy alkyl compounds (Me3-Si-O-R). As a result, the formed interface film has more pores and better conductivity, which can increase the transport rate of the active metal ions and thus reduce the internal resistance of the battery. Meanwhile, the interface film can also prevent the formation of long-chain substances by reducing the adhesion of organic matter from the electrolyte to the electrode surface and mitigate the impact of steric hindrance caused by excessively long carbon chains on the transport of the active metal ions, thereby further improving the internal resistance of the battery.

According to some embodiments of the present disclosure, the third additive includes at least one of 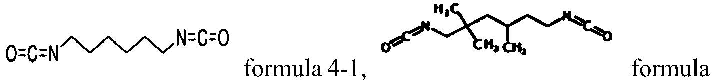 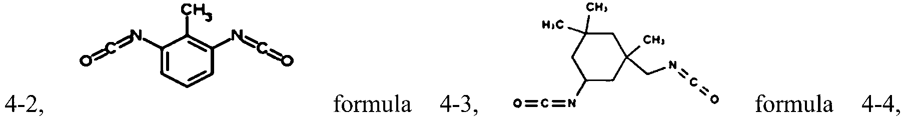 or 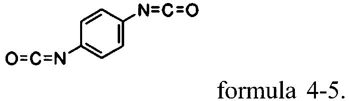 Therefore, the above-described third additive can remove water or acid from the electrolyte and reduce the impact of water or acid on an electrode structure. Further, the third additive can also generate long polymer chains on the electrode surface to participate in the formation of the interface film, thereby improving the stability of the interface film and reducing the impedance of the interface film. Therefore, the internal resistance of the battery is reduced, and the rate performance and cycle performance of the battery are improved.

According to some embodiments of the present disclosure, a mass ratio of the first additive, second additive, and third additive in the electrolyte additive is 1:(0.01 to 10):(0.01 to 10), for example, 1:0.05:0.05, 1:1:1, 1:1:5, 1:1:10, 1:5:1, 1:10:1, etc., or may range in a range composed of any one of the above-described numerical values. Therefore, by controlling the mass ratio of the first additive, second additive, and third additive within the above-described range, the first additive, the second additive, and the third additive can better exert the synergistic effects and form the stable and low-impedance interface film on the electrode surface. In this way, the transport rate of the active metal ions is improved, the internal resistance of the battery is reduced, and the gas production of the battery is reduced, thereby improving the rate performance and cycle performance of the battery.

According to some embodiments of the present disclosure, the electrolyte additive further includes a fourth additive. The fourth additive includes at least one of vinylene carbonate, fluoroethylene carbonate (FEC), ethylene sulfate, 1,3-propanesultone, or polystyrene (PS). Thus, the fourth additive functions synergistically with the first additive, the second additive, and the third additive to decompose in advance at an early stage of battery formation, and the decomposition products can participate in the formation of the interface film, thereby improving the conductivity and the stability of the interface film and improving the cycle performance of the battery.

According to some embodiments of the present disclosure, a mass ratio of the first additive, second additive, third additive, and fourth additive in the electrolyte additive is 1:( 0.01 to 10):(0.01 to 10):(0.005 to 100)

In a second aspect, the present disclosure provides an electrolyte. The electrolyte includes the electrolyte additive provided in the first aspect of the present disclosure. Therefore, the electrolyte has all the characteristics and advantages of the aforementioned electrolyte additive, which will not be described in detail herein. In general, the electrolyte has at least the advantages of reducing the internal resistance of the battery and reducing the gas production of the battery.

According to some embodiments of the present disclosure, based on a total mass of the electrolyte, a mass fraction of the first additive may range from 0.1% to 5%, for example, 0.1%, 1%, 2%, 3%, 4%, or 5%, etc., or may range in a range composed of any one of the above-described numerical values. Therefore, by controlling the content of the first additive within the above-described range, the first additive can form a film on the electrode surface prior to the solvent. The interface film formed by the products obtained by the decomposition of the first additive has good ionic conductivity, which can increase the transport rate of the active metal ions, reducing the internal resistance of the battery. Moreover, the interface film formed on the electrode surface can also reduce the probability of the contact between the electrolyte and the electrodes (the positive electrode and the negative electrode), thereby reducing the risk of the catalytical decomposition of the electrolyte and the gas production. According to some specific embodiments of the present disclosure, based on the total mass of the electrolyte, the mass fraction of the first additive may range from 0.1% to 0.5%.

According to some embodiments of the present disclosure, based on the total mass of the electrolyte, a mass fraction of the second additive may range from 0.1% to 5%, for example, 0.1%, 1%, 2%, 3%, 4%, or 5%, etc., or may range in a range composed of any one of the above-described numerical values. Therefore, by controlling the content of the second additive within the above-described range, the interface film formed on the electrode surface has more pores and better conductivity. As a result, the transport rate of the active metal ions is increased, and the internal resistance of the battery is reduced. According to some specific embodiments of the present disclosure, based on the total mass of the electrolyte, the mass fraction of the second additive may range from 0.1% to 0.5%.

According to some embodiments of the present disclosure, based on the total mass of the electrolyte, a mass fraction of the third additive ranges from 0.1% to 5%, for example, 0.1%, 1%, 2%, 3%, 4%, or 5%, etc., or may range in a range composed of any one of the above-described numerical values. Therefore, by controlling the content of the third additive within the above-described range, water or acid can be removed from the electrolyte, and its impact on the electrode structure can be reduced. Also, the long polymer chains can be generated on the electrode surface to participate in the formation of the interface film, improving the stability of the interface film, reducing the impedance of the interface film, then reducing the internal resistance of the battery, and improving the rate performance and the cycle performance of the battery. According to some specific embodiments of the present disclosure, based on the total mass of the electrolyte, the mass fraction of the third additive may range from 0.1% to 0.5%.

According to some embodiments of the present disclosure, the electrolyte further includes a fourth additive. Based on the total mass of the electrolyte, a mass fraction of the fourth additive ranges from 0.5% to 5%, for example, 0.5%, 1%, 2%, 3%, 4%, or 5%, etc., or may range in a range composed of any one of the above-described numerical values. Thus, the fourth additive acts synergistically with the first additive, the second additive, and the third additive, and decomposes in advance to participate in the formation of the interface film at the early stage of the battery formation. In this way, the conductivity and the stability of the interface film are improved, improving the cycle performance of the battery.

According to some embodiments of the present disclosure, the electrolyte further includes an electrolyte salt. Based on the total mass of the electrolyte, a mass fraction of the electrolyte salt ranges from 12% to 18%, for example, 12%, 13%, 14%, 15%, 16%, 17%, or 18%, or may range in a range composed of any one of the above-described numerical values. Therefore, the electrolyte may have both high ionic conductivity and low cost.

As an example, when the battery is a lithium-ion battery, the electrolyte salt may include at least one of lithium hexafluorophosphate or lithium bis(fluorosulfonyl)imide.

As an example, when the battery is a sodium-ion battery, the electrolyte salt may include at least one of sodium hexafluorophosphate or sodium bis(fluorosulfonyl)imide.

According to some embodiments of the present disclosure, the electrolyte further includes a solvent. The solvent includes at least one of a carbonate compound having 3 to 6 carbon atoms, a carboxylate compound having 3 to 8 carbon atoms, a sulfone compound, or an ether compound. The solvent in the electrolyte serves as an important carrier for transport of ions, and may have high ionic conductivity after dissolution of the electrolyte salt. In this way, the cycle life, charge and discharge rate, high temperature performance, low temperature performance, and energy density of the battery can be improved by selecting the above-described solvent.

According to some embodiments of the present disclosure, the carbonate compound having 3 to 6 carbon atoms includes at least one of ethylene carbonate (EC), propylene carbonate, butylene carbonate, dimethyl carbonate, ethyl methyl carbonate (EMC), diethyl carbonate, dipropyl carbonate, methylpropyl carbonate, or ethylpropyl carbonate.

According to some embodiments of the present disclosure, the carboxylate compound having 3 to 8 carbon atoms includes at least one of γ-butyrolactone, methyl acetate, methyl propionate, methyl butyrate, ethyl acetate, ethyl propionate, ethyl butyrate, propyl acetate, or propyl propionate.

According to some embodiments of the present disclosure, the sulfone compound includes sulfolane.

According to some embodiments of the present disclosure, the ether compound includes at least one of triethylene glycol dimethyl ether, or tetraethylene glycol dimethyl ether.

In a third aspect, the present disclosure provides a battery. The battery includes the electrolyte provided in the second aspect of the present disclosure. Therefore, the electrolyte has all the characteristics and advantages of the aforementioned electrolyte, which will not be described in detail herein. In general, the battery has at least the advantages of low internal resistance and low gas generation.

According to some specific embodiments of the present disclosure, the battery may be a lithium-ion battery or a sodium-ion battery.

According to some specific embodiments of the present disclosure, when the battery is the lithium-ion battery, a positive active material may include one or more of LiFe_{1-x'}M'_{x'}PO₄, LiMn_{2-y'}M_{y'}O₄ or LiNiₓCo_{y}Mn_{z}M_{1-x-y-z}O₂, where: M' includes one or more of Mn, Mg, Co, Ni, Cu, Zn, Al, Sn, B, Ga, Cr, Sr, V, or Ti; M includes one or more of Fe, Co, Ni, Mn, Mg, Cu, Zn, Al, Sn, B, Ga, Cr, Sr, V, or Ti; and 0≤x'<1, 0≤y'≤1, 0≤y≤1, 0≤x≤1, 0≤z≤1, and x + y + z≤1.

According to some specific embodiments of the present disclosure, when the battery is the lithium-ion battery, the positive active material may further include one or more of sulfide, selenide, or halide.

As an example, the positive active material may include one or more of LiCoO₂, LiFePO₄, LiFe_{0.8}Mn_{0.2}PO₄, LiMn₂O₄, LiNi_{0.5}Co_{0.2}Mn_{0.3}O₂, LiNi_{0.6}Co_{0.2}Mn_{0.2}O₂, LiNi_{0.8}Co_{0.1}Mn_{0.1}O₂, LiNi_{0.5}Co_{0.2}Mn_{0.2}Al_{0.1}O₂, or LiNi_{0.5}Co_{0.2}Al_{0.3}O₂.

According to some embodiments of the present disclosure, when the battery is the sodium-ion battery, the positive active material includes Na_{c}P_{d}(WₐO_{b})Z_{c}, where: P includes transition metal element; W includes at least one of phosphorus, sulfur, silicon, or tungsten; z includes F atom; and 0≤c≤10, 0≤d≤5, 0≤a≤10, 0≤b≤10, and 0≤e≤5.

As an example, the positive active material includes at least one of NaFePO₄, Na₂FeP₂O₇, Na₄Fe₃(PO₄)₂P₂O₇, Na₃V₂(PO₄)₃, or Na₂Fe(SO₄)₂.

According to some embodiments of the present disclosure, when the battery is the sodium-ion battery, the positive active material includes at least one of a transition metal oxide, a transition metal sulfide, a phosphorus-based material, a titanate material, or a Prussian blue material.

Typically, a battery includes a positive electrode plate, a negative electrode plate, an electrolyte, and a separator. In a charge and discharge process of the battery, active ions intercalate and deintercalate reciprocally between the positive electrode plate and the negative electrode plate. The electrolyte between the positive electrode plate and the negative electrode plate conducts ions. The separator is disposed between the positive electrode plate and the negative electrode plate, which mainly prevents the positive electrode plate and the negative electrode plate from being short-circuited while allowing the ions to pass through.

In some embodiments of the present disclosure, a positive electrode current collector may include a metal foil or a composite positive electrode current collector. For example, the metal foil may be an aluminum foil. The composite positive electrode current collector may include a polymer material substrate and a metal layer formed on at least one surface of the polymer material substrate. For example, a composite negative electrode current collector may be formed by depositing a metal material (aluminum, aluminum alloys, nickel, nickel alloys, etc.) onto a polymer material substrate (such as polypropylene (PP), polyethylene terephthalate (PET), polybutylene terephthalate (PBT), and other substrates).

In some embodiments of the present disclosure, a positive active material layer may further optionally include a conductive agent. As an example, the conductive agent may include at least one of superconducting carbon, acetylene black, carbon black, Ketjen black, carbon dots, carbon nanotubes, graphene, or carbon nanofibers.

In some embodiments of the present disclosure, the positive active material layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

In some embodiments of the present disclosure, the positive electrode plate may be prepared by the following method: components for preparing the positive electrode plate, such as the positive active material, the conductive agent, and the binder, are dispersed in a solvent (such as N-methylpyrrolidone) to form a positive electrode slurry; and the positive electrode slurry is coated on the positive electrode current collector, and after drying, cold pressing and other processes, the positive electrode plate can be obtained.

The negative electrode plate includes a negative electrode current collector and a negative active material layer disposed on at least one surface of the negative electrode current collector. The negative active material layer includes a negative active material.

In some embodiments of the present disclosure, the negative electrode current collector may be a metal foil or a composite current collector. For example, an aluminum or copper foil may be used as the metal foil. The composite current collector may include a polymer material substrate and a metal layer formed on at least one surface of the polymer material substrate. The composite current collector may be formed by depositing a metal material (aluminum, copper, copper alloy, nickel, nickel alloy, etc.) onto the polymer material substrate (such as a substrate of polypropylene (PP), polyethylene terephthalate (PET), polybutylene terephthalate (PBT), etc.).

In some embodiments of the present disclosure, a negative active material for a battery known in the related art can be adopted as the negative active material. As an example, the negative active material may include at least one of the following materials: soft carbon, hard carbon, silicon-based material, tin-based material, etc., in which the soft carbon includes graphite. The silicon-based material may include at least one of elemental silicon, silicon oxide, silicon-carbon composite, silicon-nitrogen composite, or silicon alloy. The tin-based material may include at least one of elemental tin, tin oxide, or tin alloys.

In some embodiments of the present disclosure, the negative active material layer may further optionally include a binder. The binder may include at least one of styrene-butadiene rubber (SBR), polyacrylic acid (PAA), sodium polyacrylate (PAAS), polyacrylamide

(PAM), polyvinyl alcohol (PVA), sodium alginate (SA), polymethacrylic acid (PMAA), or carboxymethyl chitosan (CMCS).

In some embodiments of the present disclosure, the negative active material layer may optionally further include a conductive agent. The conductive agent may include at least one of superconducting carbon, acetylene black, carbon black, Ketjen black, carbon dots, carbon nanotubes, graphene, or carbon nanofibers.

In some embodiments of the present disclosure, the negative active material layer may optionally further include other additives, such as a thickener (e.g., sodium carboxymethyl cellulose (CMC-Na)).

In some embodiments of the present disclosure, the negative electrode plate may be prepared by the following method: components for preparing the negative electrode plate, such as the negative active material, the conductive agent, the binder and any other components, are dispersed in a solvent (such as deionized water) to form a negative electrode slurry; and the negative electrode slurry is coated on the negative electrode current collector, and after drying, cold pressing and other processes, the negative electrode plate can be obtained.

The type of separator is not specifically limited in the present disclosure, and any known porous separator with good chemical stability and mechanical stability can be selected.

In some embodiment of the present disclosure, the material of the separator may include one or more of polyolefin, aromatic polyamide, polytetrafluoroethylene, and polyethersulfone. Further, the separator includes one or both of polyethylene and polypropylene. In addition, the separator may be obtained by sequentially stacking a plurality of layers of materials. For example, the separator includes a polypropylene layer, a polyethylene layer, and a polypropylene layer that are sequentially stacked.

In some embodiments of the present disclosure, the separator has a thickness ranging from 9 µm to 12 µm, for example, 9 µm, 10 µm, 11 µm, 12 µm, etc.

Embodiments of the present disclosure are described in detail below. The embodiments described below are exemplary and are merely used to explain the present disclosure, and they cannot be construed to limit the present disclosure. The techniques or conditions without specific indication shall be those described in the literature in the field or in accordance with the product specification. The reagents or instruments used without the indication of the manufacturers are all conventional products that can be purchased commercially.

### Example 1

1. Preparation of electrolyte: EC and EMC were mixed in a mass ratio of 3:7, and the electrolyte salt, the first additive, the second additive, the third additive, and the fourth additive were added and mixed evenly to obtain an electrolyte. Types and contents of the first additive, the second additive, the third additive, and the fourth additive are illustrated in Table 1. The electrolyte salt was LiPF₆ and LiFSI. Based on a total mass of the solvent, a mass fraction of LiPF₆ was 10%, and a mass fraction of LiFSI was 2%.
2. Preparation of positive electrode plate: a positive electrode material LiFePO₄, a conductive agent SuperP (conductive carbon black), carbon nanotubes, and an adhesive polyvinylidene fluoride (PVDF) were mixed evenly in a mass ratio of 94.5:2.5:0.5:2.5, and stirred under a vacuum condition until the mixture has a certain viscosity and uniform fluidity; the slurry was evenly coated on the front side and back side of aluminum foil, dried at 85°C, cold pressed, trimmed, cut into pieces, divided into strips, and dried under a vacuum condition at 85°C for 10 hours; after welding tabs, a positive electrode plate with an areal density of 33 mg/cm² was prepared.
3. Preparation of negative electrode plate: a hard carbon negative electrode material, the conductive agent SuperP (conductive carbon black), a thickener sodium carboxymethyl cellulose (CMC-Na), and an adhesive styrene-butadiene rubber emulsion (SBR) were fully mixed into a uniform slurry in a mass ratio of 95:1.5:2.0:1.5. After coating on both sides of the aluminum foil, the slurry was dried at 85°C, and then cold pressed, trimmed, cut into pieces, and divided into strips. Finally, the slurry was dried under a vacuum condition at 85°C for 12 hours. After welding tabs, a negative electrode plate with an areal density of 14.2 mg/cm² was prepared.
4. Separator: a 9 µm thick polyethylene porous polymer film was used as a substrate, and a 2 µm adhesive coating was applied on both sides of the substrate.
5. Preparation of the lithium-ion battery: the positive electrode plate, the separator, and negative electrode plate were sequentially stacked and then processed through a winding process to fabricate a bare cell with a theoretical capacity of 1,000 mAh. The bare cell was then placed in aluminum foil and vacuum-baked at 75°C for 10 hours before injecting the electrolyte. After vacuum packaging, standing, formation, aging, and capacity grading, the lithium-ion battery was prepared.

Lithium-ion batteries in Example 2 to Example 35 and Comparative Example 1 to Comparative Example 10 were prepared with the substantially same method of Example 1, with the respective differences specified in Table 1.

The battery of Example 27 was prepared with the substantially same method of Example 19, except that the positive active material was Na₄Fe₃(PO₄)₂(P₂O₇) (abbreviated as NFPP) and that the electrolyte salts in the electrolyte were NaPF₆ and NaFSI.

In Example 35, the positive active material is Li(NiCoMn)O₂.

**[Table 1]**

| | **First additive** | | **Second additive** | | **Third additive** | | **Fourth additive** | | | |
|---|---|---|---|---|---|---|---|---|---|---|
| | **Type** | **Content (%)** | **Type** | **Content (%)** | **Type** | **Content (%)** | **Type** | **Content (%)** | **Type** | **Content (%)** |
| **Comparative Example 1** | / | / | / | / | / | / | PS | 2 | FEC | 1 |
| **Comparative Example 2** | Formula 1-1 | 0.5 | / | / | / | / | PS | 2 | FEC | 1 |
| **Comparative Example 3** | / | / | Formula 3-1 | 0.5 | / | / | PS | 2 | FEC | 1 |
| **Comparative Example 4** | / | / | / | / | Formula 4-1 | 0.5 | PS | 2 | FEC | 1 |
| **Comparative Example 5** | Formula 1-1 | 0.5 | Formula 3-1 | 0.5 | / | / | PS | 2 | FEC | 1 |
| **Comparative Example 6** | Formula 1-1 | 0.5 | / | / | Formula 4-1 | 0.5 | PS | 2 | FEC | 1 |
| **Comparative Example 7** | / | / | Formula 3-1 | 0.5 | Formula 4-1 | 0.5 | PS | 2 | FEC | 1 |
| **Example 1** | Formula 1-1 | 0.1 | Formula 3-1 | 0.1 | Formula 4-1 | 0.1 | / | / | / | / |
| **Example 2** | Formula 1-1 | 0.5 | Formula 3-1 | 0.5 | Formula 4-1 | 0.5 | / | / | / | / |
| **Example 3** | Formula 1-1 | 0.07 | Formula 3-1 | 0.5 | Formula 4-1 | 0.5 | / | / | / | / |
| **Example 4** | Formula 1-1 | 0.1 | Formula 3-1 | 0.5 | Formula 4-1 | 0.5 | / | / | / | / |
| **Example 5** | Formula 1-1 | 3 | Formula 3-1 | 0.5 | Formula 4-1 | 0.5 | / | / | / | / |
| **Example 6** | Formula 1-1 | 5 | Formula 3-1 | 0.5 | Formula 4-1 | 0.5 | / | / | / | / |
| **Example 7** | Formula 1-1 | 6 | Formula 3-1 | 0.5 | Formula 4-1 | 0.5 | / | / | / | / |
| **Example 8** | Formula 1-1 | 0.5 | Formula 3-1 | 0.07 | Formula 4-1 | 0.5 | / | / | / | / |
| **Example 9** | Formula 1-1 | 0.5 | Formula 3-1 | 0.1 | Formula 4-1 | 0.5 | / | / | / | / |
| **Example 10** | Formula 1-1 | 0.5 | Formula 3-1 | 3 | Formula 4-1 | 0.5 | / | / | / | / |
| **Example 11** | Formula 1-1 | 0.5 | Formula 3-1 | 5 | Formula 4-1 | 0.5 | / | / | / | / |
| **Example 12** | Formula 1-1 | 0.5 | Formula 3-1 | 6 | Formula 4-1 | 0.5 | / | / | / | / |
| **Example 13** | Formula 1-1 | 0.5 | Formula 3-1 | 0.5 | Formula 4-1 | 0.07 | / | / | / | / |
| **Example 14** | Formula 1-1 | 0.5 | Formula 3-1 | 0.5 | Formula 4-1 | 0.1 | / | / | / | / |
| **Example 15** | Formula 1-1 | 0.5 | Formula 3-1 | 0.5 | Formula 4-1 | 3 | / | / | / | / |
| **Example 16** | Formula 1-1 | 0.5 | Formula 3-1 | 0.5 | Formula 4-1 | 5 | / | / | / | / |
| **Example 17** | Formula 1-1 | 0.5 | Formula 3-1 | 0.5 | Formula 4-1 | 6 | / | / | / | / |
| **Example 18** | Formula 1-1 | 0.5 | Formula 3-1 | 0.5 | Formula 4-1 | 0.5 | PS | 0.25 | FEC | 0.25 |
| **Example 19** | Formula 1-1 | 0.5 | Formula 3-1 | 0.5 | Formula 4-1 | 0.5 | PS | 2 | FEC | 1 |
| **Example 20** | Formula 1-1 | 0.5 | Formula 3-1 | 0.5 | Formula 4-1 | 0.5 | PS | 3 | FEC | 2 |
| **Example 21** | Formula 1-1 | 0.5 | Formula 2-1 | 0.5 | Formula 4-1 | 0.5 | / | / | / | / |
| **Example 22** | Formula 1-1 | 0.5 | Formula 3-2 | 0.5 | Formula 4-1 | 0.5 | / | / | / | / |
| **Example 23** | Formula 1-1 | 0.5 | Formula 3-1 | 0.5 | Formula 4-3 | 0.5 | / | / | / | / |
| **Example 24** | Formula 1-1 | 0.5 | Formula 3-1 | 0.5 | Formula 4-4 | 0.5 | / | / | / | / |
| **Example 25** | Formula 1-2 | 0.5 | Formula 3-1 | 0.5 | Formula 4-1 | 0.5 | / | / | / | / |
| **Example 26** | Formula 1-3 | 0.5 | Formula 3-1 | 0.5 | Formula 4-1 | 0.5 | / | / | / | / |
| **Example 27** | Formula 1-1 | 0.5 | Formula 3-1 | 0.5 | Formula 4-1 | 0.5 | PS | 2 | FEC | 1 |
| **Example 28** | Formula 1-1 | 0.5 | Formula 3-1 | 0.5 | Formula 4-1 | 0.5 | / | / | FEC | 1 |
| **Example 29** | Formula 1-1 | 0.5 | Formula 2-2 | 0.5 | Formula 4-1 | 0.5 | / | / | / | / |
| **Example 30** | Formula 1-1 | 0.5 | Formula 3-1 | 0.5 | Formula 4-2 | 0.5 | / | / | / | / |
| **Example 31** | Formula 1-1 | 0.5 | Formula 3-1 | 0.5 | Formula 4-5 | 0.5 | / | / | / | / |
| **Example 32** | Formula 1-1 + Formula 1-2 | 0.5 | Formula 3-1 | 0.5 | Formula 4-1 | 0.5 | / | / | / | / |
| **Example 33** | Formula 1-1 | 0.5 | Formula 3-1 + Formula 2-1 | 0.5 | Formula 4-1 | 0.5 | / | / | / | / |
| **Example 34** | Formula 1-1 | 0.5 | Formula 3-1 | 0.5 | Formula 4-1+ Formula 4-3 | 0.5 | / | / | / | / |
| **Example 35** | Formula 1-1 | 0.5 | Formula 3-1 | 0.5 | Formula 4-1 | 0.5 | / | / | / | / |
| **Comparative Example 8** | Formula 1-1 | 0.5 | / | / | / | / | / | / | / | / |
| **Comparative Example 9** | / | / | Formula 3-1 | 0.5 | / | / | / | / | / | / |
| **Comparative Example 10** | / | / | / | / | Formula 4-1 | 0.5 | / | / | / | / |

### Performance test

### 1. Cycle Capacity Retention Rate at 25°C

At 25°C, a battery was cycled 400 times for a capacity retention rate test. A sodium-ion battery was left to stand for 4 hours at an ambient temperature of 25°C, and then subjected to 400 charge-discharge cycles at a current of 1.0 C with a voltage window ranging from 1.5 V to 3.6 V. A discharge capacity of a first cycle was denoted as C₁, and a discharge capacity of the 400-th cycle was denoted as C₄₀₀. A capacity retention rate after 400 cycles at 25°C was denoted as η₁=C₄₀₀/C₁*100%.

### 2. Thickness Swelling Rate Test After Storage at 60°C for 20 Days

At 60°C, a battery was stored for 20 days before the thickness swelling rate test. Before storage, the thickness of the battery was measured with a flat thickness gauge and denoted as do. After 20 days of storage, the thickness of the battery was measured when the battery was still hot, and the thickness was denoted as d₁. A high-temperature storage swelling rate of the battery stored for 20 days at 60°C was denoted as η₂=(d₁-d₀)/d₀*100%.

### 3. Capacity Retention Rate Test After Storage at 60°C for 20 Days

At an ambient temperature of 25°C, a battery was charged to 3.6 V at a constant current and a constant voltage of 1.0 C, and then discharged to 1.5 V at a constant current of 1.0 C. A discharge capacity was denoted as Co. The battery was then transferred to the environment at 60°C for 20 days, after which the battery was discharged to 1.5 V at the constant current of 1.0 C. A high-temperature storage capacity retention rate was denoted as η₃ = (C₁/C₀)*100%.

### 4. Battery Direct Current Resistance (DCR) Test

DCR test before storage: At an ambient temperature of 25°C, a battery was charged to 3.6 V at a constant current of 1.0 C, and then held at a constant voltage of 3.6 V until a cut-off current reached 0.05 C. The battery was then left to stand for 30 min, followed by discharging at 1.0 C for 30 min (adjusted to 50% SOC), with an end voltage denoted as V₁. After standing for 1 h, the battery was discharged at 2.0 C for 10 s, and an end voltage was denoted as V₂. DCR before storage was denoted as DCR₁ = (V₁-V₂)/(2.0 C-1.0 C). DCR test after storage at 60 °C for 20 days: At an ambient temperature of 25 °C, the stored battery was charged to 3.6 V at the constant current of 1.0 C, and then held at the constant voltage of 3.6 V until the cut-off current reached 0.05 C. The battery was then left to stand for 30 min, followed by discharging at 1.0 C for 30 min (adjusted to 50% SOC), with an end voltage denoted as V₃. After standing for 1 h, the battery was discharged at 2.0 C for 10 s, and an end voltage was denoted as V₄. DCR after storage was denoted as DCR₂= (V₃-V₄)/(2.0 C-1.0 C). DCR growth rate was denoted as η₄= (DCR₂-DCR₁)/DCR₁* 100%.

Test results of the batteries of Example 1 to Example 35 and Comparative Example 1 to Comparative Example 10 are shown in Table 2.

**[Table 2]**

| | Capacity retention rate after 400 cycles η₁ | Storage at 60°C for 20 days | | |
|---|---|---|---|---|
| | | Thickness swelling rate η₂ | Capacity retention rate η₃ | DCR growth rate η₄ |
| **Comparative Example 1** | 85.70% | 9.00% | 78.80% | 12.50% |
| **Comparative Example 2** | 86.85% | 8.78% | 79.76% | 11.54% |
| **Comparative Example 3** | 87.24% | 8.49% | 80.15% | 10.35% |
| **Comparative Example 4** | 87.66% | 7.95% | 81.71% | 12.64% |
| **Comparative Example 5** | 87.82% | 7.89% | 80.64% | 10.98% |
| **Comparative Example 6** | 86.21% | 7.77% | 81.92% | 10.05% |
| **Comparative Example 7** | 87.95% | 7.98% | 80.44% | 10.17% |
| **Example 1** | 90.45% | 6.82% | 88.33% | 8.44% |
| **Example 2** | 92.58% | 6.34% | 90.15% | 7.74% |
| **Example 3** | 89.25% | 6.95% | 85.56% | 9.62% |
| **Example 4** | 92.18% | 6.66% | 88.38% | 7.85% |
| **Example 5** | 91.36% | 6.82% | 87.55% | 8.43% |
| **Example 6** | 89.09% | 6.93% | 86.65% | 8.84% |
| **Example 7** | 88.37% | 7.00% | 86.40% | 9.80% |
| **Example 8** | 88.98% | 6.80% | 85.20% | 8.70% |
| **Example 9** | 91.45% | 6.58% | 88.10% | 7.79% |
| **Example 10** | 90.77% | 6.88% | 87.71% | 7.88% |
| **Example 11** | 90.69% | 6.96% | 87.36% | 7.93% |
| **Example 12** | 89.68% | 7.14% | 85.73% | 8.64% |
| **Example 13** | 89.64% | 6.75% | 87.45% | 9.27% |
| **Example 14** | 91.52% | 6.51% | 90.01% | 7.22% |
| **Example 15** | 90.17% | 6.85% | 90.05% | 7.90% |
| **Example 16** | 90.76% | 6.94% | 89.10% | 9.22% |
| **Example 17** | 88.43% | 6.95% | 87.38% | 9.44% |
| **Example 18** | 93.21% | 6.20% | 92.38% | 6.89% |
| **Example 19** | 94.54% | 5.92% | 92.88% | 6.61% |
| **Example 20** | 93.92% | 6.21% | 92.39% | 6.92% |
| **Example 21** | 91.17% | 6.69% | 89.42% | 7.34% |
| **Example 22** | 91.29% | 6.52% | 89.71% | 7.28% |
| **Example 23** | 91.32% | 6.66% | 89.30% | 7.29% |
| **Example 24** | 91.29% | 6.79% | 89.25% | 7.45% |
| **Example 25** | 91.86% | 6.62% | 90.02% | 7.88% |
| **Example 26** | 92.12% | 6.60% | 90.10% | 7.79% |
| **Example 27** | 93.99% | 6.02% | 92.58% | 6.68% |
| **Example 28** | 94.51% | 5.99% | 92.78% | 6.69% |
| **Example 29** | 94.50% | 6.00% | 92.77% | 6.71% |
| **Example 30** | 91.30% | 6.69% | 89.28% | 7.33% |
| **Example 31** | 91.31% | 6.67% | 89.29% | 7.30% |
| **Example 32** | 92.55% | 6.36% | 90.13% | 7.76% |
| **Example 33** | 92.56% | 6.35% | 90.15% | 7.75% |
| **Example 34** | 92.54% | 6.38% | 90.11% | 7.78% |
| **Example 35** | 92.33% | 6.55% | 90.08% | 7.85% |
| **Comparative Example 8** | 89.28% | 7.58% | 85.00% | 9.90% |
| **Comparative Example 9** | 89.25% | 7.60% | 84.98% | 9.95% |
| **Comparative Example 10** | 89.12% | 7.68% | 84.95% | 9.98% |

Conclusion: As can be seen from comparison of Example 1 to Example 35 with Comparative Example 1 to Comparative Example 10, by simultaneously adding the first additive, the second additive, and the third additive to the electrolyte, the cycle capacity retention rate of the battery of present disclosure can be improved, and the thickness swelling rate and the internal resistance of the battery can be reduced. These results indicate that the electrolyte containing the first additive, the second additive, and the third additive can improve the rate performance and cycle performance of the battery.

As can be seen from Example 1 to Example 7, by adjusting the content of the first additive, the present disclosure can improve the ionic conductivity of the formed interface film, reduce the probability of contact between the electrode and the electrolyte, and reduce the risk of the catalytical decomposition of the electrolyte and the gas production. In this way, the cycle capacity retention rate of the battery can be improved, the thickness swelling rate of the battery can be reduced, and the internal resistance of the battery can be reduced.

As can be seen from Example 1, Example 2, and Example 8 to Example 12, by adjusting the content of the second additive, the present disclosure can form an interface film with more pores and better conductivity on the electrode surface, thereby reducing the internal resistance of the battery and improving the cycle capacity retention rate of the battery.

As can be seen from Example 1, Example 2, and Example 13 to Example 17, by adjusting the content of the third additive, the present disclosure can improve the stability of the interface film while reducing the impedance of the interface film. In this way, the rate performance and cycle performance of the battery are improved.

As can be seen from Example 18 to Example 20, according to the present disclosure, the first additive, the second additive, the third additive, and the fourth additive are added to the electrolyte simultaneously, which can further improve the rate performance and cycle performance of the battery.

As can be seen from Example 32 to Example 34, the electrolyte may include two types of first additive, two types of second additive, and two types of third additives, which can also improve the rate performance and cycle performance of the battery.

Although embodiments of the present disclosure have been shown and described above, it should be understood that above embodiments are merely exemplary, and cannot be construed to limit the present disclosure. For those skilled in the art, various changes, modifications, replacements, and variations can be made to the embodiments without departing from the scope of the present disclosure.

## Claims

1. An electrolyte additive, comprising a first additive, a second additive, and a third additive,
wherein the first additive comprises a compound represented by formula 1: 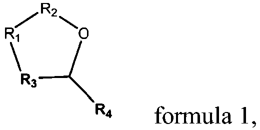
where: R₁ is selected from C atom or O atom; R₂ is selected from 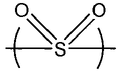 or 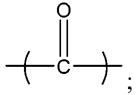 R₃ is selected from methylene, 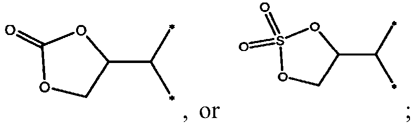 R₄ is selected from 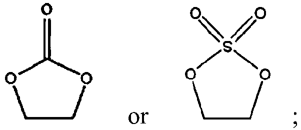 and at least one of R₂, R₃, and R₄ contain sulfur atom;
wherein the second additive comprises at least one of a compound represented by formula 2, or a compound represented by formula 3: 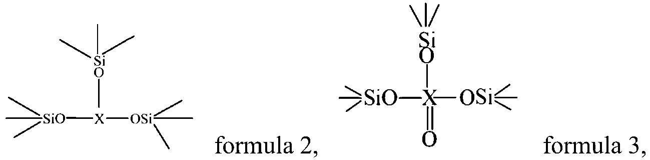
where X comprises P atom or B atom; and
wherein the third additive comprises a compound represented by formula 4:
R-N=C=O formula 4,
where R comprises at least one of alkyl, O=C=N-substituted alkyl, cycloalkyl, O=C=N-substituted cycloalkyl, aryl, or O=C=N-substituted aryl.

2. The electrolyte additive according to claim 1, wherein R comprises at least one of alkyl having 1 to 10 carbon atoms, O=C=N-substituted alkyl having 1 to 10 carbon atoms, cycloalkyl having 1 to 10 carbon atoms, O=C=N-substituted cycloalkyl having 1 to 10 carbon atoms, aryl having 6 to 10 carbon atoms, or O=C=N-substituted aryl having 6 to 10 carbon atoms.

3. The electrolyte additive according to claim 1 or 2, wherein a mass ratio of the first additive, second additive, and third additive in the electrolyte additive is 1:(0.01 to 10):(0.01 to 10).

4. The electrolyte additive according to claim 3, wherein the first additive comprises at least one of 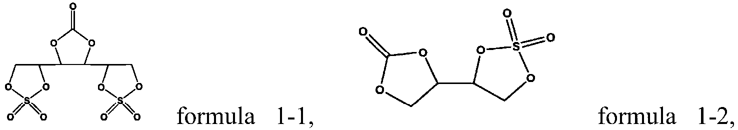 or

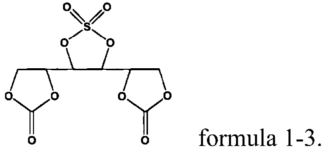

5. The electrolyte additive according to claim 3, wherein the second additive comprises at least one of 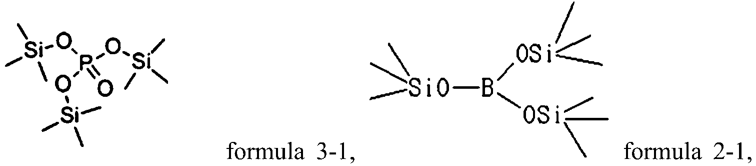 or

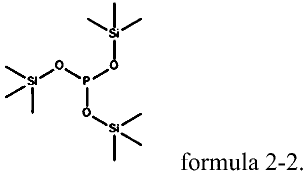

6. The electrolyte additive according to claim 3, wherein the third additive comprises at least one of 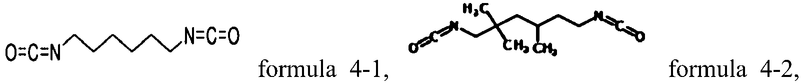 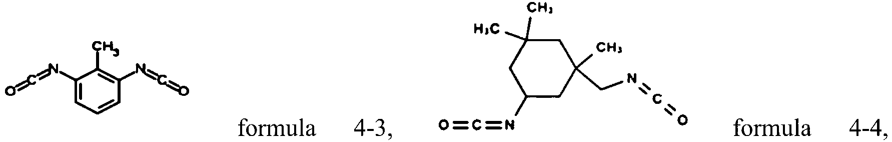 or

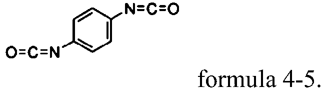

7. The electrolyte additive according to claim 3, further comprising a fourth additive, wherein the fourth additive comprises at least one of vinylene carbonate, fluoroethylene carbonate, ethylene sulfate, 1,3-propanesultone, or polystyrene.

8. The electrolyte additive according to claim 7, wherein a mass ratio of the first additive, second additive, third additive, and fourth additive in the electrolyte additive is 1:( 0.01 to 10):(0.01 to 10):(0.005 to 100)

9. An electrolyte, comprising the electrolyte additive according to any one of claims 1 to 8.

10. The electrolyte according to claim 9, wherein based on a total mass of the electrolyte:
a mass fraction of the first additive ranges from 0.1% to 5%; and/or
a mass fraction of the second additive ranges from 0.1% to 5%.

11. The electrolyte according to claim 9, wherein, based on a total mass of the electrolyte, a mass fraction of the third additive ranges from 0.1% to 5%.

12. The electrolyte according to claim 9, further comprising a fourth additive, wherein, based on a total mass of the electrolyte, a mass fraction of the fourth additive ranges from 0.5% to 5%.

13. The electrolyte according to claim 9, further comprising an electrolyte salt, wherein, based on a total mass of the electrolyte, a mass fraction of the electrolyte salt ranges from 12% to 18%.

14. A battery, comprising the electrolyte additive according to any one of claims 1 to 8 or the electrolyte according to any one of claims 9 to 13.

15. The battery according to claim 14, comprising a positive electrode plate and a negative electrode plate, wherein:
the battery is a lithium-ion battery, wherein a positive active material of the positive electrode plate comprises one or more of LiFe_{1-x'}M'_{x'}PO₄, LiMn_{2-y'}M_{y'}O₄, or LiNiₓCo_{y}Mn_{z}M_{1-x-y-z}O₂, where: M' comprises one or more of Mn, Mg, Co, Ni, Cu, Zn, Al, Sn, B, Ga, Cr, Sr, V, or Ti; M comprises one or more of Fe, Co, Ni, Mn, Mg, Cu, Zn, Al, Sn, B, Ga, Cr, Sr, V, or Ti; and 0≤x' <1, 0≤y'≤1, 0≤y≤1, 0≤x≤1, 0≤z≤1, and x + y + z≤1; and/or
the battery is a sodium-ion battery, wherein a positive active material of the positive electrode plate comprises Na_{c}P_{d}(WₐO_{b})Z_{c}, where: P comprises transition metal element; W comprises at least one of phosphorus, sulfur, silicon, or tungsten; z comprises F atom; and 0≤c≤10, 0≤d≤5, 0≤a≤10, 0≤b≤10, and 0≤e≤5; and/or
a negative active material of the negative electrode plate comprises at least one of soft carbon, hard carbon, a silicon-based material, or a tin-based material.
